# EUROPÄISCHE PATENTSCHRIFT

(11) **EP 2 227 312 B1**
(45) Veröffentlichungstag und Bekanntmachung des Hinweises auf die Patenterteilung: **25.07.2012**
(21) Anmeldenummer: 08864685.6
(22) Anmeldetag: 18.12.2008
(51) Int. Cl.: B01D 53/62, C10B 49/06, C10J 3/14, C10J 3/66

(54) **VERFAHREN UND VORRICHTUNG ZUR WIEDERAUFBEREITUNG VON CO2-HALTIGEN ABGASEN**
METHOD AND DEVICE FOR REPROCESSING CO<SB>2</SB>-CONTAINING EXHAUST GASES
PROCÉDÉ ET DISPOSITIF POUR LE RETRAITEMENT DE GAZ D'ÉCHAPPEMENT CONTENANT DU CO<SB>2</SB>

(30) Priorität: 20.12.2007 DE 102007062413
(43) Veröffentlichungstag der Anmeldung: 15.09.2010
(73) Patentinhaber: Ecoloop Gmbh, 38640 Goslar (DE)
(72) Erfinder: MÖLLER, Roland, 58667 Bad Harzburg (DE)
(74) Vertreter: Erb, Henning
(86) Internationale Anmeldenummer: PCT/EP2008/010869
(87) Internationale Veröffentlichungsnummer: WO 2009/080297

(56) Entgegenhaltungen:
- DE-A1- 3 426 912
- GB-A- 1 453 787
- GB-A- 2 110 231
- US-A- 4 748 010

## Beschreibung

Die vorliegende Erfindung betrifft ein Verfahren zur Wiederaufbereitung von CO₂-haltigen Abgasen in einem mehrstufigen Reduktionsprozess, wobei das CO₂-haltige Abgas im Gegenstrom zu thermisch zersetzbarer organischer Masse geführt und dabei in Pyrolysegase umgewandelt wird.

Als eines der größten Probleme der Gegenwart wird die globale Erwärmung angesehen. Als globale Erwärmung bezeichnet man den während der vergangenen Jahrzehnte beobachteten allmählichen Anstieg der Durchschnittstemperatur der erdnahen Atmosphäre und der Meere sowie die erwartete weitere Erwärmung in der Zukunft. Ihre hauptsächliche Ursache liegt nach dem gegenwärtigen wissenschaftlichen Verständnis in der Verstärkung des Treibhauseffektes durch den Menschen. Dieser verändert die Zusammensetzung der Atmosphäre vorwiegend durch das Verbrennen fossiler Brennstoffe und die daraus resultierenden Emissionen von Kohlendioxid (CO₂). Diese Emissionen werden durch menschliches Handeln von Fabriken, industriellen Anlagen, Wärmekraftwerken, Automobilen, Flugzeugen usw. ausgestoßen. Die Reduzierung des Kohlendioxidausstoßes wird somit als eine der wichtigsten Maßnahmen zum Schutz der Umwelt angesehen.

Weltweit werden zahlreiche Anstrengungen unternommen, um eine Senkung der Kohlendioxidemissionen zu erreichen. Hierbei spielen die Entwicklung und der Einsatz alternativer Energiequellen, die eine verbesserte oder gar neutrale CO₂-Bilanz aufweisen, eine wesentliche Rolle. Es handelt sich hierbei beispielsweise um Brennstoffzellentechnik, Energiegewinnung aus Sonne, Wind und Wasser, Verwendung von nachwachsenden Energieträgern usw. Ein weiterer Ansatz besteht im globalen Ausbau der Kernenergie; der allerdings aufgrund anderer wesentlicher Umweltrisiken und ungelöster Entsorgungsprobleme politisch stark umstritten ist.

Um zumindest eine Verlangsamung des Anstieges der Kohlendioxidemissionen zu erreichen, wird intensiv an der Verbesserung der Energieeffizienz in allen nur denkbaren Bereichen des menschlichen Handelns gearbeitet. Hierbei geht es um die Effizienz des Einsatzes und der Umwandlung von Energie, also um das Verhältnis von Nutzen zum Energieaufwand. Dieses Verhältnis ist sowohl bei der Erzeugung von Sekundärenergie, wie z.B. von Strom in Kraftwerken, als auch bei der Nutzung von Primär- oder Sekundärenergie relevant. Es wird beispielsweise durch integrierte Kraftwerkstechnologien ständig an der Verbesserung von Wirkungsgraden bei der Stromerzeugung gearbeitet. So wurde z.B. die autotherme Kohlevergasungstechnik in zahlreichen Anmeldungen in Kombination mit Kraftwerken zur Stromerzeugung vorgeschlagen. Dadurch konnten die gasförmigen Vergasungsprodukte über Gasturbinen verstromt, und durch entsprechende integrierte Energiekoppelungen konnte so ein verbesserter Wirkungsgrad solcher Anlagen realisiert werden. Verfahren dieser Art sind beispielsweise in DE 3241169 C2, DE 694 04 187 T2, DE 3817690 A1 oder DE 3617364 A1 offenbart. Weiterhin wird ständig versucht, den spezifischen Energiebedarf von Industrieprozessen, Wohnhäusern, Kraftfahrzeugen, Elektrogeräten usw. zu optimieren.

Weitere Forschungs- und Entwicklungsprojekte haben sich zur Aufgabe gemacht, große Kohlendioxidemittenten, z.B. Kohlekraftwerke, als so genannte kohlendioxidfreie Kraftwerke auszuführen. Hierbei werden Verfahren vorgeschlagen, die eine Ad- bzw Absorption von Kohlendioxid aus Rauchgasen mittels Wäschersystemen mit bestimmten Ad- bzw. Absorptionsmedien vorsehen. Solche Verfahren sind beispielsweise in DE 697 26039, DE 695 03 036, DE 10 2005 050 385 A1, DE 699 31 418 T2, DE 694 32 376 T2, DE 694 28 057 T2 und DE 603 10 594 T2 beschrieben. Weitere Verfahren schlagen die Anreicherung von Kohlendioxid aus Rauchgasen über Membrantechnologien, z. B. offenbart in DE 699 10 441, vor. Andere Verfahren, z. B. DE 199 40 371 beschreiben das Ausfrieren von Kohlendioxid aus Rauchgasen. Ein weiteres Verfahren offenbart in DE 698 15 762 T2 die Umwandlung von Kohlendioxid mit Wasserstoff zu festem Kohlenstoff.

Verfahren zur Anreicherung bzw. Abtrennung von Kohlendioxid aus Rauchgasen erfordern eine entsprechende Speicherung des Kohlendioxids, um eine Emission in die Atmosphäre nachhaltig zu vermeiden. Hierzu werden Verfahren vorgeschlagen, welche die Beseitigung von Kohlendioxid in der Tiefsee vorsehen. Solche Verfahren sind beispielsweise in DE 691 04 274 T2 oder DE 696 10 231 T2 offenbart. Ein weiterer Ansatz besteht in der Einspeicherung von verflüssigtem Kohlendioxid in der Erdkruste. Ein solches Verfahren ist beispielsweise in EP 1 571 105 A2 beschrieben. Ein weiteres Verfahren schlägt in EP 0963 780 A1 die Entfernung von CO₂ aus Abgasen vor, wobei dieses CO₂ dann unterirdisch durch bakterielle Konversion zu Methan umgewandelt und dort gespeichert wird.

Neben den oben beschriebenen großen Kohlendioxidemittenten, existieren Prozesse mit sehr hohem Energiebedarf, die neben der CO₂-Emission durch Verbrennung fossiler Energieträger, zusätzlich CO₂ als Koppelprodukt erzeugen und somit eine sehr hohe CO₂-Fracht als Mischung aus Rauch- und Prozessgas emittieren. Hierbei handelt es sich um Kalzinierprozesse, die insbesondere Carbonate durch thermische Abspaltung von CO₂ in Oxide umwandeln. Hierbei werden zumeist fossil beheizte Kalzinieröfen eingesetzt.

Zur Erzeugung der benötigten hohen Temperaturen weisen Kalzinieröfen Brennerzonen oder Brennerlanzen auf, bei denen es sich um Brennersysteme handeln kann, die mit den unterschiedlichsten fossilen Energieträger, wie beispielsweise Erdgas, Heizöl, oder staubförmigen Kohlenstoffträgern betrieben werden können. In einigen Bereichen werden auch alternative Energieträger eingesetzt. In der Zementindustrie ist der Einsatz von z. B. Sekundärbrennstoffen und in der Kalkindustrie der Einsatz von z. B. Tierfett Stand der Technik.

Kalzinieröfen werden beispielsweise in sehr großem Maßstab zur Herstellung von Zement, Magnesia (Magnesiumoxid) und für Branntkalk (Calciumoxid) eingesetzt. Neben einigen speziellen Ofentypen werden hauptsächlich Drehrohröfen im Zementbereich eingesetzt. Für die Herstellung von Branntkalk haben sich Kalzinier-Schachtöfen durchgesetzt, da sich dieser Ofentyp besonders für die Herstellung von grobstückigem Branntkalk eignet und gegenüber anderen Ofentypen, wie z. B. Drehrohröfen, den Vorteil eines niedrigeren spezifischen Energieeinsatzes, und damit auch eine niedrigere spezifische CO₂-Emission aufweist.

Calciumoxid stellt weltweit einen der wichtigsten Grundstoffe dar, dessen Herstellmenge jährlich auf ca. 140 Millionen Tonnen geschätzt wird.

Den so genannten Kalkschachtöfen werden als Rohstoff Kalkstein (Calciumcarbonat) in unterschiedlicher Korngröße, jedoch in grobstückiger Form mit Hilfe spezieller Beschickungssysteme am oberen Ende des Ofenschachts über den Deckel zugeführt. Zumeist werden hier sogenannte Drehkübelsysteme verwendet, die einer Entmischung des Materials aufgrund unterschiedlicher Korngrößen vorbeugen.

Der Kalkstein durchwandert dann den Ofenschacht von oben nach unten, wobei dieser kontinuierlich durch von unten nach oben strömende Heißgase erwärmt wird. Diese Heißgase werden in der Regel durch direkte Befeuerung der Ofenschüttung mit fossilen Brennstoffen in einer oder mehreren Brennerzonen erzeugt. In der Brennerzone bzw. in der Nähe der Brennerlanzen wird der Kalkstein bis in den Kern der Partikel auf ca. 900 bis 1200°C erwärmt. Dadurch findet eine thermische Spaltung des Calciumcarbonats statt, wodurch Kohlendioxid abgespalten wird, das dann gemeinsam mit den Heißgasen die Ofenschüttung nach oben durchströmt. Man spricht hier auch von einer thermischen Entsäuerung, aus der als fester Rückstand Branntkalk resultiert. Der Branntkalk wird nach dem Durchwandern der Brennerzone im unteren Ofenschachtbereich durch entgegenströmende Verbrennungsluft, die am Schachtboden eindosiert wird, abgekühlt, über die Entnahmevorrichtung aus dem Ofenschacht entlassen und anschließend durch Siebung in definierte Korngrößenfraktionen überführt.

Die bei der Herstellung von Branntkalk eingesetzten Brennstoffe dürfen nur einen sehr geringen Schwefelgehalt aufweisen, da das bei der Verbrennung entstehende Schwefeldioxid mit der Kalkschüttung im Ofenschacht reagiert und zu einem intolerablen Qualitätsverlust des Branntkalkes führt. Weiterhin ist die Mitverbrennung fossiler Brennstoffe als Beimischung in der Kalkschüttung nur mit aschearmen und möglichst reinen Brennstoffen möglich, um eine Kontamination des Branntkalkes zu reduzieren.

Das als Koppelprodukt entstehende Kohlendioxid vermischt sich mit den Heißgasen aus der Direktbefeuerung und verlässt den Ofenschacht über eine oder mehrere Gasaustrittsöffnungen im oberen Ofenschachtbereich, wobei das Gas anschließend über Filteranlagen von mitgerissenem Staub befreit und üblicherweise als Rauchgas in die Atmosphäre abgegeben wird. Kalkschachtöfen werden in der Regel mit Luft als Oxidationsgas betrieben und weisen im Rauchgas einen Kohlendioxidgehalt von bis zu 28 Vol% auf. Durch die in der Regel fehlende Rauchgasreinigung können dem Schüttgut in Kalkschachtöfen nur bedingt Brennstoffe zugemischt werden, die einen hohen Anteil flüchtiger organischer Verbindungen, wie z. B. im Falle von Anthrazit, aufweisen, da diese vor der Nutzung in der Brennerzone ausgetrieben und zusammen mit dem Rauchgas emittiert werden. Das geschilderte thermische Verfahren ist sehr energieintensiv, da für die Branntkalkproduktion in nicht optimierten Anlagen bis zu 4,9 GJ thermische Energie pro Tonne hergestelltem Branntkalk erforderlich sind. Das bedeutet, dass für die Beheizung der Kalzinierschachtöfen sehr große spezifische Einsatzmengen fossiler Brennstoffe erforderlich sind, die zusammen mit dem entstehenden CO₂ aus der thermischen Entsäuerung des Calziumcarbonats zu einer erheblichen CO₂-Emission führen (siehe nachfolgende Tabelle 1).

**Tabelle 1**

| Fossiler Brennstoff | Bedarf fossiler Brennstoff | Gesamte CO₂-Emission aus fossiler Verbrennung und thermischer Entsäuerung |
|---|---|---|
| | [t/t CaO] | [t/t CaO] |
| Schweres Heizöl | 0,11 | 1,13 |
| Anthrazit | 0,14 | 1,21 |
| Koks | 0,16 | 1,21 |
| Erdgas | 0,092 | 1,01 |

In der Vergangenheit wurden große Anstrengungen unternommen, den spezifischen Energieverbrauch des Kalkbrennprozesses und damit auch die CO₂-Emission zu senken. Durch verschiedene technische Weiterentwicklungen von Kalkschachtöfen konnte der spezifische Energieeinsatz optimiert werden. Das betrifft beispielsweise Energierückgewinnung durch optimierte Verbrennungsluftführung oder besondere Schachtkonstruktionen zur optimierten Energieverteilung. Weiterhin wurde auch eine neue Generation von Parallelschachtöfen entwickelt, in denen die Abwärme des Brennvorgangs in einem der Ofenschächte für die Vorwärmung des Kalksteins im zweiten Ofenschacht genutzt werden kann und dieser Prozess alternierend in den beiden Ofenschächten stattfindet.

Durch diesen technischen Fortschritt konnte der spezifische Energieeinsatz durch optimierte Ofentechnologie zwar beträchtlich gesenkt werden, obgleich der Prozess naturgemäß einen Mindestenergiebedarf aufweist, der in optimal arbeitenden Schachtofenanlagen etwa im Bereich von 3,5 GJ pro Tonne hergestelltem Branntkalk liegt und nur noch unwesentlich beeinflusst werden kann. Dadurch ist auch die spezifische CO₂-Emission bei ca. 1 Tonne pro Tonne hergestelltem Branntkalk (am Beispiel von Anthrazit) an einem aktuell technisch machbaren Minimum angekommen.

Die EP 107 131 B1 beschreibt ein Verfahren zum Vergasen kohlenstoffreichen Materials und Herstellung von Produkten aus carbothermischer Reduktion. Diese Produkte und verbleibende feste Reststoffe werden schmelzflüssig am Boden des Schachtofens abgelassen. Dadurch wird die Energiebilanz nachteilig beeinflusst, da die Schmelzen z. B im Falle von Kalziumcarbit mehr als 2000°C heiß sein können. In erster Linie bezieht sich dieses Dokument auf die Herstellung von Synthesegas.

Die DE 103 48 116 A1 beschreibt ein Verfahren zur Herstellung von hochreinem CO, wobei der Festmassenstrom aus den zu vergasenden organischen Massen selbst besteht. Es wird explizit drauf hingewiesen, dass Kalziumanteile bei diesem speziellen Verfahren unerwünscht sind.

Die US 3 841 851 A beschreibt einen Reaktor mit einer mechanischen Behandlungsstufe für ein Reaktorbett aus kohlenstoffhaltigen Massen und definiertem Anteilen anorganischer Bestandteile. Diese werden an der Unterseite des Reaktors geschmolzen und flüssig abgelassen.

Die US 6 527 980 B1 beschreibt einen katalytisch betriebenen Reaktor, der ausschließlich gasförmige Ausgangsprodukte verwendet und keinerlei Feststoffe vergast.

Die US 4,748,010 A beschreibt ein zweistufiges Verfahren, bei dem in einer ersten Stufe Kalkstein teilkalziniert und dann in einer zweiten Stufe eingesetzt werden. Die Aufbereitung von CO₂-haltigen Abgasen ist nicht beschrieben.

Die GB 1 453 787 beschreibt ein Verfahren zur Vergasung von thermisch zersetzbarer kohlenstoffhaltiger Feststoffmasse unter Zuleitung von Kohlendioxid. Dabei wird kohlendioxidhaltiges Gas im Gegenstrom zu der Feststoffmasse durch mehrere Zonen bis in einen Druckausgleichsbereich geführt und dabei in Pyrolysegase umgewandelt. Die Feststoffmasse wird bei Temperaturen unter 700°C und in Flussrichtung der Feststoffmasse ansteigenden Temperaturen mit entgegenströmenden Gasen in Kontakt gebracht wird, bis bei Temperaturen ab 1000°C und entsprechendem Druck Masse mit Kohlendioxid zu Kohlenmonoxid umgewandelt wird. Danach noch verbleibende Feststoffmasse wird im Gegenstrom durch das kohlendioxidhaltige Gas abgekühlt und ausgeschleust. Die ausgeschleuste Feststoffmasse wird in den Kreislauf zurückgeführt. Der zusätzliche Einsatz eines unvergasbaren Schüttgutes ist nicht vorgesehen.

Die GB 2110231A beschreibt ein Verfahren zur Herstellung von Synthesegas aus Abfällen.

Für die Erfindung hat sich daher die Aufgabe gestellt, ein Verfahren bereitzustellen, das die Wiederaufbereitung von CO₂-haltigen Abgasen technisch einfacher gestaltet und in wirtschaftlich attraktiver Weise zu einer signifikanten Einsparung von fossilen Brennstoffen führt.

Diese Aufgabe wird erfindungsgemäß gelöst durch ein Verfahren gemäß Anspruch 1, bei welchem, das CO₂-haltige Abgas durch wirtschaftliche Reduktion mit pyrolysierbarer organischer Masse in einem nahezu autothermen Verfahren unter anderem zu Pyrolysegas umgewandelt wird und dieses Pyrolysegas wieder als Brenngas oder Ausgangsstoff für chemische Prozesse zur Verfügung gestellt werden kann. Das unvergasbare Schüttgut wird dabei in einem Kreislauf geführt. Es bildet ein Wanderbett und dient primär als Transportmittel für die am Verfahren beteiligten Stoffe, nimmt selbst aber nicht an der Vergasungsreaktion teil. Gleichzeitig stellt es die Gasdurchlässigkeit für den gasförmigen Gegenstrom sicher.

Es hat sich herausgestellt, dass das vorliegende Verfahren bei Verwendung von pyrolysierbarer organischer Masse, beispielsweise auch von kunststoffhaltigen Abfall- oder Reststofffraktionen oder auch mit Biomasse, weitgehend autotherm durchgeführt werden kann, wobei die pyrolysierbare organische Masse die für die Reduktion des Kohlendioxids erforderliche Energie nahezu vollständig bereit stellt. Darüber hinaus entsteht bei dem Verfahren aus der pyrolysierbaren organischen Masse anteilig ein Pyrolysekoks, der den für die Umwandlung erforderlichen Kohlenstoff teilweise zur Verfügung stellt. Weiterhin hat sich gezeigt, dass die Durchführung dieser Reduktion durch die Verwendung eines grobstückigen Reaktionsbettes bestehend aus feuerfestem Schüttgut, besonders gefördert wird, da dieses auch den Gegenstrom der Gase ermöglicht. Vorzugsweise besteht das Schüttgut aus basischen Kalzinaten wie z. B. Kalziumoxid, wobei in diesem Fall die Bildung von Dioxinen und Furanen vollständig vermieden wird und eine Abtrennung von Schadstoffen, wie beispielsweise Schwermetalle oder Halogene, durch Bindung an staubförmigem Kalziumoxid auf besonders einfache Weise erfolgen kann.

Grundsätzlich können aber auch andere Schüttgüter als Wanderbett zum Einsatz kommen, wie z. B. metallische oder keramische Materialien, aber auch Vorstufen basischer Kalzinate, wie z. B. Kalkstein. Je nach Temperaturführung kann dieser quasi inert im Kreislauf geführt werden oder durch gezielte Temperaturanhebung in der Kohlenmonoxiderzeugungsstufe an seiner Oberfläche gebrannt werden, wodurch eine reaktive Oberfläche aus CaO erzeugt wird, die, wie zuvor beschrieben, für die Schadstoffbindung vorteilhaft ist.

Als besonders vorteilhaft stellte sich ferner heraus, dass durch die Nutzung des Reaktionsbettes im Gegenstrom zu dem erzeugten Brenngas eine nahezu optimale Energienutzung innerhalb des Reduktionsprozesses möglich wird.

Zweckmäßige Korngrößen des im Kreislauf geführten, grobstückigen Schüttgutes liegen in einer Größenordnung von 0,5 - 15 cm.

Vorzugsweise wird in der Zwischenstufe C eine Temperatur von 600 - 1000°C eingestellt und der Druck reduziert, so dass in dieser Stufe nebeneinander eine Pyrolyse der organischen Masse und die Boudouard-Gleichsgewichtsreaktion bei niedrigem Druck und niedriger Temperatur abläuft. Es hat sich gezeigt, dass bei diesen Werten die gewünschten Reaktionsvorgänge optimal ablaufen, wobei sich die Angabe reduzierter Druck auf den Umgebungsdruck bezieht.

Die Abkühlstufe stellt die besondere Energieeffizienz des Verfahrens sicher und sorgt dafür, dass nur feste Reststoffe und großstückiges Schüttgut verbleiben.

Zur Einstellung eines bestimmten Druckes ist in einer Weiterbildung des Verfahrens vorgesehen, dass in einer Druckausgleichszone A oberhalb der Brenngaserzeugungszone B eine Mischung aus grobem und feinteiligem Schüttgut als Druckspeicher eingesetzt wird.

Beispiele für eine Temperatur- und Drucksteuerung in den einzelnen Verfahrenszonen sind das gezielte Zusammensetzen der Feststoffmassen, d. h. eine gezielte Auswahl der Materialien und der Verteilung der Korngrößen, die Wahl der Durchsatzgeschwindigkeit des Feststoffmassenstromes und/oder das Einstellen des Verhältnisses der zugefügten thermisch zersetzbaren organischen Masse zu dem CO₂ und gegebenenfalls hinzugefügtem sauerstoffhaltigem Gas.

Besonders bevorzugt ist ein Feststoffmassenstrom, der aus grob- und feinstückigem Kalk und thermisch zersetzbarer organischer Masse besteht, wobei zusätzlich ein Kohlenstoffträger zugemischt werden kann, beispielsweise um gezielte Eigenschaften des entstehenden Pyrolysegases einzustellen.

Eine besonders bevorzugte Weiterbildung des Verfahrens sieht vor, dass die zuvor beschriebenen Abläufe in einem Kalzinierschachtofen durchgeführt werden, wobei das Schüttgut durch den Ofenschacht von oben nach unten geführt wird, so dass die kohlenstoffhaltigen Komponenten unter weitgehendem Sauerstoffausschluss unter Erzeugung von kurzkettigen Molekülen mit einer Kettenlänge < C₄ enthaltenen Pyrolysegasen und Pyrolysekoks thermisch gespalten werden und die entstehenden Gase aus dem Kalzinierschachtofen abgesaugt werden.

Die Verwendung eines Kalzinierschachtofens im Rahmen des erfindungsgemäßen Verfahrens bietet den Vorteil, dass sich der Schüttgutstrom alleine unter seiner Schwerkraft bei kontinuierlicher Entnahme am unteren Ende des Kalzinierschachtofens durch diesen bewegt, während umgekehrt der Gegenstrom bestehend aus dem am Boden des Kalzinierschachtofens eingeleiteten CO₂ und den darauf folgend durch die Reaktionen in den einzelnen Zonen entstehenden Gase sich ohne weiteres durch den porösen Schüttgutstrom aufwärts bewegen kann.

Der Sauerstoffausschluss sorgt zum einen für die günstigen gewünschten Reduktionsbedingungen zur Erzeugung des Kohlenmonoxides, wirkt aber auch der Bildung beispielsweise von Dioxinen und Furanen entgegen, die bei vorhandenem Sauerstoff aufgrund möglicherweise in der thermisch zersetzbaren Masse vorhandenen Halogene entstehen könnten. Damit erlaubt das Verfahren auch den Einsatz unter normalen Bedingungen schwer zu entsorgender Abfälle, wie z. B. PVC und sonstige Kunststoffabfälle, belasteter Abfallhölzer, Bitumen, ölverseuchte Böden und dergleichen. Das Verfahren kann damit auch als Entsorgungsverfahren für diese Stoffe und z. B. auch sogenannte Shredderleichtfraktionen als Restmaterial des Fahrzeugrecyclings eingesetzt werden.

Besonders vorteilhaft ist unter anderem auch aus diesem Grund der Einsatz basischer Kalzinate als Schüttgut, vorzugsweise in der Form von Branntkalk. Auf die Vermeidung der Bildung von Dioxinen und Furanen aufgrund dieses Materials als Schüttgut ist bereits weiter oben eingegangen worden.

Die ebenfalls bereits angesprochene Abtrennung von Schadstoffen durch Bindung an staubförmiges Kalziumoxid kann dadurch vervollständigt werden, dass in der Brenngaserzeugungsstufe D und/oder in der Zwischenstufe C staub- und feinteilige Partikel aus dem Massenstrom entfernt werden, wobei ergänzend oder alternativ auch eine Gasfiltration der Pyrolysegase vorgenommen werden kann, um den mittransportierten Feinstaub mit den an feinteiliges Schüttgut gebundenen Pyrolyserückständen zu reinigen.

Gegebenenfalls kann die Filtration der gasförmigen Produkte auch nach einer erfolgten thermischen Verwertung der Pyrolysegasen erfolgen, beispielsweise nach dem Verbrennen in einer Brennkammer, allerdings ist die Filtration an dieser Stelle wegen der wesentlich höheren Gasmenge in der Regel aufwändiger.

Für die im Rahmen des erfindungsgemäßen Verfahrens entstehenden Pyrolysegase sind eine Reihe unterschiedlichster Anwendungszwecke gegeben. Beispielsweise kann das Pyrolysegas als Synthesegas für chemische Prozesse und/oder zur thermischen Verwertung eingesetzt werden, oder die Pyrolysegase können mittels Partialverflüssigung und/oder Druckwechseladsorbtion in ihre Hauptgaskomponenten Kohlenmonoxid, Wasserstoff und Kohlenwasserstoffe separiert werden. Separiertes Kohlenmonoxid kann dann beispielsweise als Synthesegas zur stofflichen Verwertung in chemischen Prozessen eingesetzt werden, ebenso wie der separierte Wasserstoff, der aber auch unmittelbar thermisch verwertet kann. Die anfallenden Kohlenwasserstoffe können beispielsweise zur thermischen und/oder stofflichen Verwertung und/oder als Treibstoffe eingesetzt werden.

Anstelle einer unmittelbaren Verwertung oder separiert in ihre Gaskomponenten können die Pyrolysegase auch mittels einer Wassergas-Shift-Reaktion durch katalysierte Reaktion unterhalb von 500° C mit Wasserdampf im wesentlichen zu Wasserstoff und Kohlendioxid umgewandelt werden, die mittels physikalischer Trennverfahren separiert werden, wobei der Wasserstoff wiederum zu thermischen und/oder stofflichen Verwertung eingesetzt und das CO₂ teilweise zur Bildung des Gegenstromes in den Reaktionszonen rückgeführt wird.

Mithilfe des zuletzt beschriebenen Verfahrens lässt sich aus kohlenstoffhaltigen Ausgangsprodukten unterschiedlichster Art, wie zum Beispiel Biomasse, Kunststoffen oder dergleichen reiner Wasserstoff herstellen, wobei die CO₂-Emission durch die unmittelbare Rückführung eines Teilstromes an entstehendem Kohlendioxid in die Reaktionszonen erheblich reduziert werden kann.

Besonders bevorzugt ist eine Ergänzung des erfindungsgemäßen Verfahrens dahingehend, dass das wiederaufzubereitende CO₂-Abgas in einem Brennprozess unter Verwendung fossiler Brennstoffe erzeugt wird und die entstehenden Pyrolysegase wiederum in dem Brennprozess eingesetzt werden. Damit lässt sich der Einsatz fossiler Brennstoffe beträchtlich reduzieren, wobei bereits auf den Vorteil des erfindungsgemäßen Verfahrens hingewiesen worden ist, dass im Rahmen der CO₂-Wiederaufbereitung kohlenstoffhaltige Materialien unterschiedlichster Art eingesetzt werden können.

Eine noch weitere besonders bevorzugte Ausgestaltung des Verfahrens sieht vor, dass das CO₂-haltige Abgas in Kalzinierprozessen erzeugt wird, in welchem Karbonate durch Abspaltung von CO₂ in Oxide umgewandelt werden, wobei die bei der Wiederaufbereitung des CO₂ anfallenden Pyrolysegase eingesetzt werden, um einen Teil der für den Kalzinierprozess benötigten Wärmeenergie aufzubringen. Auf diese Art und Weise lassen sich die CO₂-Emissione bei der sehr CO₂-intensiven Herstellung von Branntkalk erheblich reduzieren, wobei als besonderer Vorteil zu nennen ist, dass die vorzugsweise im Rahmen der CO₂-Wiederaufbereitung zum Einsatz kommenden Kalzinier-schachtöfen konventionellen Kalzinierschachtöfen angenähert sind.

Gegenstand der vorliegenden Anmeldung ist auch eine Vorrichtung zur Durchführung des Verfahrens in einer der zuvor beschriebenen Ausgestaltungen. Eine solche Vorrichtung ist im Anspruch 20 beschrieben und in ihrer technischen Ausführung und in den Anforderungen konventionellen Kalzinierschachtöfen weitestgehend angenähert, so dass sie leicht in einen Produktionsverbund der Kalzinierindustrie implementiert werden kann.

Nachfolgend wird anhand der beigefügten Abbildung näher auf mögliche Ausgestaltungen der vorliegenden Erfindung eingegangen.

Die schematische Darstellung zeigt auf der rechten Seite ein Verfahren zur Wiederaufbereitung des CO₂-haltigen Abgases 12. Pyrolysierbare organische Masse wird dabei in einem Reaktionsbett aus grobstückigem Kalziumoxid durch vier Reaktionsstufen 1, 2, 3, 4 geführt. Je nach Bedarf können dem Reaktionsbett zusätzlich noch Kohlenstoffträger zugemischt werden. In der ersten Stufe, der Brenngaserzeugungsstufe 1, wird die organische Masse durch Pyrolyse in kurzkettige Kohlenwasserstoffe und Wasserstoff unter Erzeugung von Pyrolysekoks und Rückstand thermisch unter reduzierenden Bedingungen pyrolysiert. Die Temperatur in der ersten Reaktionsstufe 1 beträgt 250 bis 700 °C. In der zweiten Reaktionsstufe, der Zwischenstufe 2, bilden bei ansteigender Temperatur Reste der pyrolysierbaren organischen Masse weiterhin gasförmige Kohlenwasserstoffe und Wasserstoff aus und vorhandenes Kohlendioxid reagiert in direktem Kontakt mit Pyrolysekoks und gegebenenfalls mit zugemischten Kohlenstoffträgern bereits zu Kohlenmonoxid. In der dritten Reaktionsstufe, der Kohlenmonoxiderzeugungsstufe 3, wird unter zusätzlicher Einbringung von Wärmeenergie bei 800 bis 1600 °C der Rest an Pyrolysekoks und gegebenenfalls zugemischter Kohlenstoffträger vollständig mit Kohlendioxid zu Kohlenmonoxid umgesetzt. In der vierten Reaktionsstufe, der Abkühlstufe 4, werden die festen Reaktionsreste, bestehend aus dem grobstückigen Kalziumoxid, festen Reststoffen, enthaltend Asche, Kalziumchlorid, Kalziumhydroxid, Schwermetalle und Halogenide sowie feinem Kalziumoxidstaub, an den die Rückstände gebunden sind, auf unterhalb von 100 °C abgekühlt und über eine Dosiervorrichtung 14 ausgeschleust. Nach dem Ausschleusen wird das grobstückige Kalziumoxid von den weiteren Rückständen bei 16 getrennt und zur erneuten Ausbildung eines Kalziumoxid-Reaktionsbettes im Kreis geführt. Das grobe Kalziumoxid wird erneut mit der pyrolysierbaren organischen Masse bei 18 vermischt und - gegebenenfalls unter Ergänzen des verbrauchten Kalziumoxids durch frisches - durch die vier Reaktionsstufen hindurchgeführt.

Im Gegenstrom zum Festbettmengenstrom wird das Kohlendioxid 12 - gegebenenfalls über eine Gasmischvorrichtung 13 mit weiteren Gasen verdünnt - in der Abkühlstufe 4, eingeleitet, durch die Kohlenmonoxiderzeugungsstufe 3, unter Umwandlung des Pyrolysekokses mit dem CO₂ und ggf. Wasser zu Kohlenmonoxid und ggf. Wasserstoff hindurchgeleitet und am Beginn der Brenngaserzeugungsstufe 1 zusammen mit den ausgebildeten Kohlenwasserstoffen sowie mit Wasserstoff über eine Absaugvorrichtung 20 abgesaugt. Hierbei durchdringt der im Gegenstrom geführte Gasstrom vollständig das Reaktionsbett.und erfährt in der Kohlenmonoxiderzeugungsstufe 3 durch einen bei Bedarf zugeschalteten Brenner eine zusätzliche Einspeisung von Heißgasen in Form eines Gasgemisches aus CO₂ und gegebenenfalls zusätzlichem Sauerstoff und/oder weiteren Gasen wie z.B. Stickstoff oder Wasserdampf. Diese Heißgase können durch eine Grundlastfeuerung mit fossilen Brennstoffen erzeugt werden, wobei hier auch schwefelreiche Brennstoffe zum Einsatz kommen können, da entstehende Schwefeloxide ähnlich wie Chlor und Schwermetalle im Calciumoxidstaub als Sulfide gebunden werden. Die Grundlastfeuerung kann auch durch den Einsatz von Pyrolysegasen ergänzt werden.

Das in der Reaktionsstufe 1 über die Absaugvorrichtung 20 abgesaugte Gasgemisch, im wesentlichen enthaltend H₂, CO, Kohlenwasserstoffe und gegebenenfalls weitere Gase, wird über eine Filtervorrichtung 22 in verschiedene Fraktionen aufgeteilt. Zum einen wird im Gasstrom mittransportierter Feinstaub, enthaltend Pyrolyserückstände, die an feinteiligem Kalziumoxid gebunden sind, abgetrennt. Zum anderen werden Brenngase 24 nach dem Abtrennen des Feinstaubes als Gemisch aus kurzkettigen Kohlenwasserstoffen, Wasserstoff und Kohlenmonoxid abgetrennt.

Im Verfahren können die Brenngase weiterhin separiert werden, sodass Kohlenmonoxid getrennt von Wasserstoff und den Kohlenwasserstoffen als mögliches Synthesegas 26 erhalten wird und die Kohlenwasserstoffe als mögliche Heiz-/Treibstoffe 28 gewonnen werden. Wasserstoff kann als chemischer Grundstoff erhalten und verwertet werden.

Eine weitere vorteilhafte Verfahrensweise besteht darin, das Gasgemisch nach dem Abtrennen des Feinstaubes mittels Wassergas-Shift-Reaktion 30 durch katalysierte Reaktion mit Wasserdampf im Wesentlichen in Wasserstoff und Kohlendioxid umzuwandeln.

Alternativ kann auch auf Trennung bzw. Umwandlung der Gaskomponenten verzichtet, und das Gemisch aus kurzkettigen Kohlenwasserstoffen, Wasserstoff und Kohlenmonoxid direkt thermisch verwertet werden.

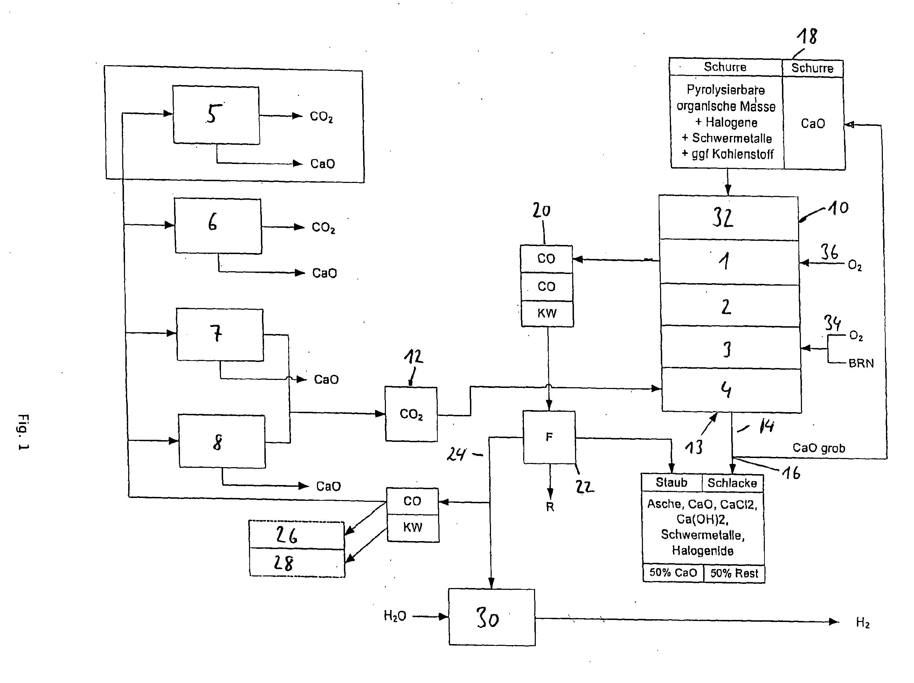

Das durch die CO₂-Einspeisung in großen Mengen anfallende Kohlenmonoxid wird im vorliegenden Fall zur thermischen Verwertung einem parallelen, industriellen Herstellungsprozess, z. B. in der Figur 1 als Kalkbrennprozess veranschaulicht, der in vier Brennöfen 5 bis 8 durchgeführt wird, zugeführt. Das dabei im Abgas erneut anfallende Kohlendioxid kann ganz oder auch teilweise in der Brenngaserzeugung wiederverwertet werden. Gezeigt ist die Verwertung der Pyrolysegase/Brenngase in allen eingesetzten Brennöfen 5, 6, 7, 8, wobei nur die CO₂-Abgase der beiden Brennöfen 7 und 8 wieder aufbereitet werden. Hierbei ist es besonders vorteilhaft, den Kalkbrennprozess mit reinem Sauerstoff oder sauerstoffangereicherter Luft als Oxidationsgas zu betreiben, da in diesem Fall ein hochkonzentriertes CO₂-haltiges Abgas erhalten wird. Dies ist gegenüber der Fahrweise mit Verbrennungsluft vorteilhaft, da kein oder nur wenig Inertgas (Stickstoff) in die Brenngaserzeugung eingebracht wird. Hohe Inertgasanteile führen zu einer sehr hohen Gasbelastung und limitieren dadurch die Wiederverwertungskapazität in der Brenngaserzeugung sowie den Brennwert des erzeugten Brenngases.

Die Vorrichtung 10 zur Durchführung des Verfahrens sieht die Aufgabe des Reaktionsbettes, enthaltend die pyrolysierbare organische Masse, über eine Schurre 32 vor. Die Schurre ist nach oben offen und gewährleistet ein ständiges Reservoir an pyrolysierbarer Masse in dem Reaktionsbett. Die Reaktionsführung kann über den Kohlendioxidgehalt des abgesaugten Gasgemisches erfolgen und bestimmt so zum einen die Geschwindigkeit, mit der die Dosiervorrichtung 14 den Feststoffmengenstrom kontinuierlich durch die vier Reaktionsstufen führt und zum anderen die Menge an zusätzlicher, thermischer Energie, die über eine Brennervorrichtung 34 in der Reaktionsstufe 3 eingebracht wird.

Eventuell enthaltene Schwermetallrückstände erfahren durch die Abkühlung durch das abflussseitig zum Feststoffmengenstrom eingespeiste Kohlendioxid vor ihrer Ausschleusung eine oberflächliche, direkte Abkühlung mit CO₂.

Sowohl Halogene als auch Schwermetalle, die in der pyrolysierbaren organischen Masse enthalten sein können, fallen in Staub und festen Reststoffen als an Kalziumoxidpartikel gebundene Oxide bzw. Hydroxide oder Halogenide an.

Bevorzugt weist die Brenngaserzeugungsstufe 1 eine kontrollierte Sauerstoffeinleitung 36 mit gegebenenfalls zusätzlicher Brenngaseinleitung auf, mit der durch Nachoxidation beim Nachrutschen von frischem, pyrolysierbarem Material ein vorbestimmtes Temperaturprofil in dieser Reaktionsstufe gehalten wird.

In dem vorbeschriebenen Verfahren können wechselnde Halogengehalte von bis zu 50% in der pyrolysierbaren organischen Masse in schadstoffarme Produkte umgewandelt werden, da Halogene im direkten Kontakt mit dem Kalziumoxidbett in Staub und feste Reststoffen als Kalziumhalogenide und Halogenide von Metallen in Feststoffform anfallen. Die Grenzwerte für die Emission von Dioxinen und Furanen werden sicher eingehalten.

Außerdem werden Schwermetalle auch als Oxide an Kalziumoxid - und Kalziumhydroxidpartikel gebunden und in den festen Reststoffen und im Staub in fester Form abgetrennt. Pyrolysierbare organische Massen mit hohem Schwermetallgehalt können hier verwertet werden, ohne dass es zu einer Kontamination der erzeugten Brenngase kommt.

Die Energierückgewinnung in Form von Kohlenmonoxid, welches anschließend zu Kohlendioxid verbrannt wird und dabei thermische Energie freisetzt, erlaubt die Versorgung von Industrieprozessen mit thermischer Energie über ein Gasleitungsnetz.

### Ausführungsbeispiele

Die nachfolgenden Ausführungsbeispiele sollen die vorliegende Erfindung erläutern, aber nicht einschränken.

### Beispiel 1

In einer Pilotanlage entsprechend der Vorrichtung 10 wurde ein Reaktionsbett bestehend aus grobstückigem Branntkalk kontinuierlich in einem Mengenstrom von 1500 kg/h im Kreis geführt. Die Beheizung der Kohlenmonoxiderzeugungsstufe 3 mit Erdgas und Sauerstoff wurde über ein Brennersystem 34 so eingestellt, dass in der Brenngaserzeugungsstufe 1 eine Temperatur von 550 bis 600°C und in der Kohlenmonoxiderzeugungsstufe 3 eine Temperatur von ca. 1100 bis 1200 °C vorherrschte. Zum Reaktionsbett wurde kontinuierlich 600 kg/h einer Mischkunststofffraktion (mit einem Heizwert von 6,94 kW/kg und einem Chlorgehalt von 1,6 %) und 1500 kg/h Steinkohle (Fettkohle mit einem Kohlenstoffgehalt von ca. 73,5 %) zugemischt . Gleichzeitig wurde über die Abkühlstufe 4 Kohlendioxid 12 mit einem Mengenstrom von 2000 kg/h eindosiert.

Das entstehende Brenngas wurde aus der Brenngaserzeugungsstufe 1 mittels Gasgebläße über ein thermisch beständiges Gasfilter 22 und einen nachgeschalteten Gaskühler abgesaugt.

Nachdem ein stabiler Betriebszustand im kontinuierlichen Betrieb erreicht war, haben sich bei einer Einspeisemenge von 300 kg/h Erdgas die Betriebsparameter stabil eingestellt. Diese sind in der nachfolgenden Tabelle 2 dargestellt:

**Tabelle 2**

| | |
|---|---|
| Temperatur Brenngaserzeugungsstufe 1 | 580 bis 630 °C |
| Temperatur Zwischenstufe 2 | 870 bis 910 °C |
| Temperatur Kohlenmonoxiderzeugungsstufe 3 | 1100 bis 1200 °C |
| Temperatur Abkühlstufe 4 | 40 bis 70 °C |
| Temperatur Eintritt Gasfiltration | 430 bis 540 °C |
| Temperatur Austritt Gaskühler | 45 bis 50 °C |
| Druck in der Brenngaserzeugungsstufe | - 50 bis - 30mbar |
| Druck in der Kohlenmonoxiderzeugungsstufe | 10 bis 25 mbar |

Um eine vollständige Vergasung des gesamten Kohlenstoffeintrages im Reaktor zu erreichen, wurde zusätzlich Wasser in einem Mengenstrom von 1750 kg/h in die Kohlenmonoxiderzeugungsstufe 3 dosiert.

Der Mengenstrom des Brenngases nach dem Gaskühler wurde kontinuierlich gemessen und die Zusammensetzung mittels Gasanalytik bestimmt. Die nachfolgende Tabelle 3 zeigt die ermittelten Durchschnittswerte:

**Tabelle 3**

| | | |
|---|---|---|
| Mengenstrom Brenngas (nach Gaskühler) | 8058 | Nm³/h |
| Heizwert (HU) | 3,48 | kW/Nm³ |
| Gehalt Kohlenmonoxid | 49,0 | Vol% |
| Gehalt Wasserstoff | 44,1 | Vol% |
| Gehalt Methan | 4,3 | Vol% |
| Gehalt Ethan | 0,3 | Vol% |
| Kohlendioxid | 1,2 | Vol% |

Um einen weitgehend autothermen Betrieb zu erreichen, wurde die Erdgasmenge im Brennersystem 34 auf 50 kg/h reduziert und für den Ausgleich des Kohlenstoff/Sauerstoff-Verhältnisses die Zumischmenge Steinkohle um weitere 1000 kg/h auf 2500 kg/h erhöht und die Wassermenge in die Kohlenmonoxiderzeugungsstufe auf 1000 kg/h reduziert.

Nach Einstellung eines stabilen stationären Betriebszustandes ergab sich eine veränderte Gasmenge und Gaszusammensetzung. Die Daten sind in der nachfolgenden Tabelle 4 dargestellt.

**Tabelle 4**

| | | |
|---|---|---|
| Mengenstrom Brenngas (nach Gaskühler) | 7876 | Nm³/h |
| Heizwert (HU) | 3,56 | kW/Nm³ |
| Gehalt Kohlenmonoxid | 62,8 | Vol% |
| Gehalt Wasserstoff | 28,8 | Vol% |
| Gehalt Methan | 5,2 | Vol% |
| Gehalt Ethan | 0,3 | Vol% |
| Kohlendioxid | 1,5 | Vol% |

Während dieser Versuchsphase wurde neben der in Tabelle 4 dargestellten Gasanalytik ein Teilstrom des Rohgases vor der Gasfilteranlage 22 isokinetisch abgesaugt und das heiße Gas durch einen bei 0 bis 5 °C gekühlten Staubabscheider geleitet. Mit dem darin abgeschiedenen Staub, der unter diesen Temperaturbedingungen nahezu quantitativ alle eventuell entstandenen Dioxine und Furane enthält, wurde eine Dioxin- und Furan-Analytik durchgeführt. Die Ergebnisse sind in der nachfolgenden Tabelle 5 dargestellt:

**Tabelle 5**

| **Dioxine/ Furane (PCDF/ PCDD)** | **Dioxine/ Furane (PCDF/ PCDD)** |
|---|---|
| Gehalt | Gehalt |
| TEQ | TEQ |
| (WHO) exkl | (WHO) inkl. |
| . BG [a] | . BG [b] |
| [ng/kg] | [ng/kg] |
| < 10 | < 10 |

Aus anderen thermischen Verwertungsverfahren von halogenhaltigen Kunststofffraktionen, sind in solchen Pyrolyse- oder auch Verbrennungsstäuben Gehalte von Dioxinen und Furanen > 1000 ng/kg TEQ als durchaus üblich bekannt.

Aus dem stationären Betrieb ergibt sich folgende Energie- und CO₂-Bilanz:

### Dem System wurden zugeführt:

| | |
|---|---|
| 50 kg/h Erdgas, | |
| entspricht einem Heizwert (HU) von: 2500 kg/h Steinkohle, | 0,69 MW/h |
| entspricht einem Heizwert (HU) von: 1000 kg/h Wasser | 19,9 MW/h |
| 600 kg/h Mischkunststoffe (Zuzahlung für Entsorgung) 2000 kg/h CO₂ | |

### Aus dem System wurden gewonnen:

| | |
|---|---|
| 7876 Nm³/h Brenngas | |
| mit einem Heizwert von: | 3,56 KW/Nm³ |
| Entspricht einem Gesamtenergieäquivalent | |
| des Brenngases von: | 28,04 MW/h |
| Rest-CO₂ im Brenngas: | 236 kg/h |

### Ergebnis:

Im Beispiel 1 konnte die Reformierung eines Mengenstromes von 1764 kg/h CO₂ unter Erzeugung von neuem Brenngas realisiert werden, indem ein Mengenstrom von 600 kg/h einer Mischkunststoff-Abfallfraktion, mit einem Heizwert (HU) von 6,94 kW/kg und 1,6 % Chlor, als Energieträger und teilweise als Kohlenstofflieferant in dem erfindungsgemäßen Verfahren eingesetzt wurde. Die Kohlenstoffbilanz wurde durch den zusätzlichen Einsatz von 2500 kg/h Steinkohle (Fettkohle) als Kohlenstoffträger und 1000 kg/h Wasser ausgeglichen. Die Bildung von Dioxinen und Furanen im Rohgasstaub konnte nicht nachgewiesen werden.

### Beispiel 2

In einer Pilotanlage entsprechend der Vorrichtung 10 wurde ein Reaktionsbett bestehend aus grobstückigem Branntkalk kontinuierlich in einem Mengenstrom von 1500 kg/h im Kreis geführt. Die Beheizung der Kohlenmonoxiderzeugungsstufe 3 mit Erdgas und Sauerstoff wurde über ein Brennersystem 34 so eingestellt, dass in der Brenngaserzeugungsstufe 1 eine Temperatur von 550 bis 600°C und in der Kohlenmonoxiderzeugungsstufe 3 eine Temperatur von ca. 1100 bis 1200 °C vorherrschte. Zum Reaktionsbett wurde kontinuierlich 600 kg/h einer Mischkunststofffraktion (mit einem Heizwert von 6,94 kW/kg und einem Chlorgehalt von 1,6%) und 2000 kg/h Abfallholz (belastetes A4-Holz mit einem Kohlenstoffgehalt von ca. 39,9%) zugemischt 18. Gleichzeitig wurde über die Abkühlstufe 4 Kohlendioxid 12 mit einem Mengenstrom von 2000 kg/h eindosiert.

Das entstehende Brenngas wurde aus der Brenngaserzeugungsstufe 1 mittels Gasgebläße über ein thermisch beständiges Gasfilter und einen nachgeschalteten Gaskühler abgesaugt.

Nachdem ein stabiler Betriebszustand im kontinuierlichen Betrieb erreicht war, haben sich bei einer Einspeisemenge von 300 kg/h Erdgas die Betriebsparameter stabil eingestellt. Diese sind in der nachfolgenden Tabelle 6 dargestellt:

**Tabelle 6**

| | |
|---|---|
| Temperatur Brenngaserzeugungsstufe 1 | 520 bis 590 °C |
| Temperatur Zwischenstufe 2 | 780 bis 820 °C |
| Temperatur Kohlenmonoxiderzeugungsstufe 3 | 1000 bis 1100 °C |
| Temperatur Abkühlstufe 4 | 30 bis 55 °C |
| Temperatur Eintritt Gasfiltration | 425 bis 470 °C |
| Temperatur Austritt Gaskühler | 20 bis 35 °C |
| Druck in der Brenngaserzeugungsstufe | - 50 bis - 30mbar |
| Druck in der Kohlenmonoxiderzeugungsstufe | 10 bis 25 mbar |

Um eine vollständige Vergasung des gesamten Kohlenstoffeintrages im Reaktor zu erreichen, wurde zusätzlich Wasser in einem Mengenstrom von 1000 kg/h in die Kohlenmonoxiderzeugungsstufe 3 dosiert.

Der Mengenstrom des Brenngases nach dem Gaskühler wurde kontinuierlich gemessen und die Zusammensetzung mittels Gasanalytik bestimmt. Die nachfolgende Tabelle 7 zeigt die ermittelten Durchschnittswerte:

**Tabelle 7**

| | | |
|---|---|---|
| Mengenstrom Brenngas (nach Gaskühler) | 7614 | Nm³/h |
| Heizwert (HU) | 3, 26 | kW/Nm³ |
| Gehalt Kohlenmonoxid | 48,0 | Vol% |
| Gehalt Wasserstoff | 35, 6 | Vol% |
| Gehalt Methan | 5, 3 | Vol% |
| Gehalt Ethan | 0, 4 | Vol% |
| Kohlendioxid | 2,3 | Vol% |

Um einen weitgehend autothermen Betrieb zu erreichen, wurde die Erdgasmenge im Brennersystem 34 auf 50 kg/h reduziert und für den Ausgleich des Kohlenstoff/Sauerstoff-Verhältnisses die Zumischmenge Altholz um weitere 2000 kg/h auf 4000 kg/h erhöht und die Wassermenge in die Kohlenmonoxiderzeugungsstufe gestoppt.

Nach Einstellung eines stabilen stationären Betriebszustandes ergab sich eine veränderte Gasmenge und Gaszusammensetzung. Die Daten sind in der nachfolgenden Tabelle 8 dargestellt.

**Tabelle 8**

| | | |
|---|---|---|
| Mengenstrom Brenngas (nach Gaskühler) | 7384 | Nm³/h |
| Heizwert (HU) | 3,21 | kW/Nm³ |
| Gehalt Kohlenmonoxid | 60,3 | Vol% |
| Gehalt Wasserstoff | 16,3 | Vol% |
| Gehalt Methan | 6,7 | Vol% |
| Gehalt Ethan | 0,4 | Vol% |
| Kohlendioxid | 3,0 | Vol% |

Während dieser Versuchsphase wurde neben der in Tabelle 8 dargestellten Gasanalytik ein Teilstrom des Rohgases vor der Gasfilteranlage 22 isokinetisch abgesaugt und das heiße Gas durch einen bei 0 bis 5 °C gekühlten Staubabscheider geleitet. Mit dem darin abgeschiedenen Staub, der unter diesen Temperaturbedingungen nahezu quantitativ alle eventuell entstandenen Dioxine und Furane enthält, wurde eine Dioxin- und Furan-Analytik durchgeführt. Die Ergebnisse sind in der nachfolgenden Tabelle 9 dargestellt:

**Tabelle 9**

| **Dioxine/ Furane (PCDF/ PCDD)** | **Dioxine/ Furane (PCDF/ PCDD)** |
|---|---|
| Gehalt | Gehalt |
| TEQ | TEQ |
| (WHO) exkl | (WHO) inkl |
| . BG [a] | .. BG [b] |
| [ng/kg] | [ng/kg] |
| < 10 | < 10 |

Aus anderen thermischen Verwertungsverfahren von halogenhaltigen Kunststofffraktionen, sind in solchen Pyrolyse- oder auch Verbrennungsstäuben Gehalte von Dioxinen und Furanen > 1000 ng/kg TEQ als durchaus üblich bekannt.

Aus dem stationären Betrieb ergibt sich folgende Energie- und CO₂-Bilanz:

### Dem System wurden zugeführt:

| | |
|---|---|
| 50 kg/h Erdgas, | |
| entspricht einem Heizwert (HU) von: | 0,69 MW/h |
| 4000 kg/h Altholz, | |
| entspricht einem Heizwert (HU) von: | 16,18 MW/h |
| 600 kg/h Mischkunststoffe (Zuzahlung für Entsorgung) | |
| 2000 kg/h CO₂ | |

### Aus dem System wurden gewonnen:

| | |
|---|---|
| 7384 Nm³/h Brenngas mit einem Heizwert von: | 3,21 KW/Nm³ |
| Entspricht einem Gesamtenergieäquivalent des Brenngases von: | 23,70 MW/h |
| Rest-CO₂ im Brenngas: | 423 kg/h |

### Ergebnis:

Im Beispiel 2 konnte die Reformierung eines Mengenstromes von 1577 kg/h CO₂ unter Erzeugung von neuem Brenngas realisiert werden, indem ein Mengenstrom von 600 kg/h einer Mischkunststoff-Abfallfraktion, mit einem Heizwert (HU) von 6,94 kW/kg und 1,6 % Chlor, als Energieträger und teilweise als Kohlenstofflieferant in dem erfindungsgemäßen Verfahren eingesetzt wurde. Die Kohlenstoffbilanz wurde durch den zusätzlichen Einsatz von 4000 kg/h Altholz als Kohlenstoffträger ausgeglichen. Die Bildung von Dioxinen und Furanen im Rohgasstaub konnte nicht nachgewiesen werden.

## Patentansprüche

1. Verfahren zur Wiederaufbereitung von CO₂-haltigen Abgasen in einem mehrstufigen Reduktionsprozess, wobei das CO₂-haltige Abgas im Gegenstrom zu einem Feststoffmassenstrom aus unvergasbarem Schüttgut und thermisch zersetzbarer organischer Masse, die nicht nur Kohle enthält durch mehrere Zonen (4, 3, 2, 1) bis in einen Druckausgleichsbereich geführt und dabei in Pyrolysegase umgewandelt wird, wobei in Flussrichtung des Feststoffmassenstromes
a. in einer Brenngaserzeugungsstufe (1) bei 250 - 700°C die organische Masse unter reduzierenden Bedingungen in kurzkettige Kohlenwasserstoffe, Wasserstoff und Kohlenmonoxid unter Erzeugung von Koks und Rückstand thermisch zersetzt wird,
b. in einer Zwischenstufe (2) bei ansteigender Temperatur eine Oxidation des Koks durchgeführt wird, wobei das entstehende Kohlenmonoxid entgegen dem Festmassenstrom in Richtung der Brenngaserzeugungsstufe (1) abgesaugt wird,
c. in einer Kohlenmonoxiderzeugungsstufe (3) bei 800-1.600°C verbliebene Koksreste vollständig mit Kohlendioxid zu Kohlenmonoxid unter Einstellung von Druck und Temperatur nach dem Boudouard-Gleichgewicht umgewandelt werden,
d. in einer Abkühlstufe (4) feste Reststoffe und grobstückiges unvergasbares Schüttgut im CO₂-Gegenstrom auf unterhalb 100°C abgekühlt und ausgeschleust werden,
e. wenigstens das ausgeschleuste unvergasbare Schüttgut nach der Entnahme wieder in den Kreislauf zurückgeführt wird.

2. Verfahren nach Anspruch 1, **dadurch gekennzeichnet, dass** in der Zwischenstufe (2) eine Temperatur von 600 - 1000°C eingestellt und der Druck reduziert wird, so dass in dieser Stufe nebeneinander eine Pyrolyse der organischen Masse und die Boudouard-Gleichgewichtsreaktion bei niedrigem Druck und niedriger Temperatur ablaufen.

3. Verfahren nach Anspruch 2, **dadurch gekennzeichnet, dass** die Pyrolysegase mittels einer Saugvorrichtung (20) abgezogen werden, die den Unterdruck in der Zwischenstufe erzeugt.

4. Verfahren nach einem der vorhergehenden Ansprüche, **dadurch gekennzeichnet, dass** in einer Druckausgleichszone (32) oberhalb der Brenngaserzeugungszone (1) eine Mischung aus grobem und feinteiligem Schüttgut als Druckspeicher eingesetzt wird.

5. Verfahren nach einem der vorhergehenden Ansprüche, **dadurch gekennzeichnet, dass** eine Temperatur- und Drucksteuerung über die Zusammensetzung der Feststoffmassen und/oder deren Durchsatzgeschwindigkeit erfolgt.

6. Verfahren nach einem der vorhergehenden Ansprüche, **dadurch gekennzeichnet, dass** eine Temperatur- und Drucksteuerung über das Verhältnis der zugeführten thermisch zersetzbaren organischen Masse zu CO₂ und gegebenenfalls hinzugefügtem sauerstoffhaltigem Gas erfolgt.

7. Verfahren nach einem der vorhergehenden Ansprüche, **dadurch gekennzeichnet, dass** dem Feststoffmassenstrom zusätzlich ein Kohlenstoffträger zugemischt wird.

8. Verfahren nach einem der vorhergehenden Ansprüche, **dadurch gekennzeichnet, dass** Wasser und/oder Wasserdampf in die Abkühlstufe (4), die Zwischenstufe (2) oder die Kohlenmonoxidstufe (3) eindosiert wird.

9. Verfahren nach einem der vorhergehenden Ansprüche, **dadurch gekennzeichnet, dass** der mehrstufige Reduktionsprozess in einem Kalzinierschachtofen (10) durchgeführt wird, wobei das Schüttgut durch den Ofenschacht von oben nach unten geführt wird, so dass die kohlenstoffhaltigen Komponenten unter weitgehendem Sauerstoffausschluss unter Erzeugung von kurzkettigen Molekülen mit einer Kettenlänge < C₄ enthaltenen Pyrolysegasen und Pyrolysekoks thermisch gespalten werden und die entstehenden Pyrolysegase aus dem Kalzinierschachtofen abgesaugt werden und vorzugsweise als Schüttgut basische Kalzinate, deren Vorstufen oder inerte Schüttgüter eingesetzt werden, vorzugsweise in der Form von Branntkalk (CaO).

10. Verfahren nach einem der vorhergehenden Ansprüche, **dadurch gekennzeichnet, dass** zum Rückführen in den Kreislauf Schüttgut mit einer Körnung im Bereich von 0,5 - 15 cm nach der Entnahme aus der Abkühlstufe ausgeschleust wird.

11. Verfahren nach Anspruch 10, **dadurch gekennzeichnet, dass** die Pyrolysegase über eine Gasfiltration (22) von mittransportiertem Feinstaub, der Pyrolyserückstände enthält, die an feinteiliges Schüttgut gebunden sind, gereinigt werden.

12. Verfahren nach einem der vorhergehenden Ansprüche, **dadurch gekennzeichnet, dass**
die Pyrolysegase als Synthesegas (26) für chemische Prozesse und/oder zur thermischen Verwertung eingesetzt werden,
die Pyrolysegase mittels Partialverflüssigung und/oder Druckwechseladsorbtion in ihre Gaskomponenten Kohlenmonoxid, Kohlendioxid, Wasserstoff und Kohlenwasserstoffe separiert werden, wobei das Kohlenmonoxid als Synthesegas (26) zur stofflichen Verwertung in chemischen Prozessen eingesetzt wird, der separierte Wasserstoff zur thermischen und/oder stofflichen Verwertung eingesetzt wird und/oder die Kohlenwasserstoffe (28) zur thermischen und/oder stofflichen Verwertung und/oder als Treibstoffe eingesetzt werden, oder
die Pyrolysegase, mittels Wassergas-Shift-Reaktion (30) durch katalysierte Reaktion unterhalb von 500°C mit Wasserdampf im wesentlichen zu Wasserstoff und Kohlendioxid umgewandelt werden, die mittels physikalischer Trennverfahren separiert werden, wobei der Wasserstoff zur thermischen und/oder stofflichen Verwertung eingesetzt und das entstehende CO₂ teilweise zur Bildung des Gegenstromes zurückgeführt wird.

13. Verfahren nach einem der vorhergehenden Ansprüche, **dadurch gekennzeichnet, dass** das wiederaufzubereitende CO₂-Abgas in einem Brennprozess unter Verwendung fossiler Brennstoffe erzeugt wird und die bei der Wiederaufbereitung entstehenden Pyrolysegase wiederum in dem Brennprozess eingesetzt werden oder das CO₂-haltige Abgas in einem Kalzinierprozess (5, 6, 7, 8) erzeugt wird, in welchem Karbonate durch Abspaltung von CO₂ in Oxide umgewandelt werden, wobei die bei der Wiederaufbereitung entstehenden Pyrolysegase (20) eingesetzt werden, um einen Teil der für den Kalzinierprozess benötigten Wärmeenergie aufzubringen.

14. Vorrichtung zur Durchführung eines Verfahrens nach einem der vorhergehenden Ansprüche, bestehend aus einem vertikalen Schachtofen (10), bei dem am oberen Ende ein Einlassschacht (32) für den Stoffmengenstrom und am unteren Ende eine Abzugsvorrichtung (14) für feste Reststoffe und Asche angeordnet ist wobei der Einlassschacht (32) aus einer vertikalen Schurre besteht, die als Druckausgleichsbehälter mit einer Mischung aus unvergasbarem Schüttgut und thermisch zersetzbarer organischer Masse gefüllt ist, dass in einem oberen Abschnitt (1) des Schachtofens (10) eine Absaug- (20) und Abtrennvorrichtung (22) für Gas und feinstückige Partikel angeordnet ist und in einem mittleren Abschnitt (3) Brenngaszuführungen (34) zur Steuerung der Ofentemperatur in dem Schacht (10) münden und dass am unteren Ende (14) des Schachtofens (10) Gaszuführungen (12, 13) für CO₂ und sauerstoffhaltiges Gas vorgesehen sind, die mit Mengenreglern für die Einstellung des Boudouard-Gleichgewichtes in dem Schachtofen (10) ausgestattet sind, wobei weiterhin eine Vorrichtung (16) vorgesehen ist, die nach der Abzugsvorrichtung (14) das unvergasbare Schüttgut von den festen Reststoffen trennt und zu dem Einlassschacht (32) zurückführt.

## Claims

1. A method for reprocessing CO₂-containing waste gases in a multistage reduction process, the CO₂-containing waste gas being passed countercurrently to a solid mass flow of ungasifiable bulk material and thermally decomposable organic mass, which does not solely contain coal, through a plurality of zones (4, 3, 2, 1) as far as into a pressure equalisation zone and so converted into pyrolysis gases, wherein, in the direction of flow of the solid mass flow,
a. in a fuel gas generating stage (1) at 250-700°C the organic mass is thermally decomposed under reducing conditions into short-chain hydrocarbons, hydrogen and carbon monoxide with the production of coke and residue,
b. in an intermediate stage (2) with increasing temperature the coke is oxidised, wherein the resultant carbon monoxide is exhausted contrary to the solid mass flow towards the fuel gas generating stage (1),
c. in a carbon monoxide generating stage (3) at 800-1,600°C remaining coke residues are completely converted with carbon dioxide into carbon monoxide with pressure and temperature being adjusted in accordance with Boudouard's equilibrium,
d. in a cooling stage (4) solid residues and coarse pieces of ungasifiable bulk material are cooled to below 100°C in the CO₂ counterflow and discharged,
e. after removal, at least the discharged ungasifiable bulk material is returned to the circuit.

2. A method according to claim 1, **characterised in that** in intermediate stage (2) a temperatures of 600-1000°C is established and the pressure is reduced, such that pyrolysis of the organic mass and Boudouard's equilibrium reaction proceed together at low pressure and low temperature in this stage.

3. A method according to claim 2, **characterised in that** the pyrolysis gas is drawn off by means of a suction device (20) which generates the reduced pressure in the intermediate stage.

4. A method according to any one of the preceding claims, **characterised in that**, in a pressure equalisation zone (32) above the fuel gas generating stage (1), a mixture of coarse and finely divided bulk material is used for pressure storage.

5. A method according to any one of the preceding claims, **characterised in that** temperature and pressure are controlled via the composition of the solid masses and/or the throughput rate thereof.

6. A method according to any one of the preceding claims, **characterised in that** temperature and pressure are controlled via the ratio of the supplied thermally decomposable organic mass to CO₂ and optionally added oxygen-containing gas.

7. A method according to any one of the preceding claims, **characterised in that** a carbon source is additionally admixed into the solid mass flow.

8. A method according to any one of the preceding claims, **characterised in that** water and/or steam is/are apportioned into the cooling stage (4), the intermediate stage (2) or the carbon monoxide stage (3).

9. A method according to any one of the preceding claims, **characterised in that** the multistage reduction process is carried out in a calcining shaft kiln (10), wherein the bulk material is passed from above down through the kiln shaft, such that the pyrolysis gases and pyrolysis coke which contain carbon-containing components are thermally cleaved with extensive exclusion of oxygen to produce short-chain molecules with a chain length of <C₄ and the resultant pyrolysis gases are exhausted from the calcining shaft kiln and the bulk material used preferably comprises basic calcination products, the precursors thereof or inert bulk materials, preferably in the form of quicklime (CaO).

10. A method according to any one of the preceding claims, **characterised in that**, for recirculation into the circuit, bulk material with a grain size in the range from 0.5-15 cm is discharged after removal from the cooling stage.

11. A method according to claim 10, **characterised in that** entrained fine particulates, which contain pyrolysis residues bound to finely divided bulk material, are removed from the pyrolysis gases by gas filtration (22).

12. A method according to any one of the preceding claims, **characterised in that**
the pyrolysis gases are used as synthesis gas (26) for chemical processes and/or for thermal recycling,
the pyrolysis gases are separated by means of partial liquefaction and/or pressure swing adsorption into their gas components carbon monoxide, carbon dioxide, hydrogen and hydrocarbons, wherein the carbon monoxide is used as synthesis gas (26) for material recycling in chemical processes, the separated hydrogen is used for thermal and/or material recycling and/or the hydrocarbons (28) are used for thermal and/or material recycling and/or as motor fuels, or
the pyrolysis gases are substantially converted into hydrogen and carbon dioxide by means of a water-gas shift reaction (30) by catalysed reaction below 500°C with steam, said hydrogen and carbon dioxide being separated by means of physical separation methods, wherein the hydrogen is used for thermal and/or material recycling and the resultant CO₂ is partially recirculated to form the counterflow.

13. A method according to any one of the preceding claims, **characterised in that** the CO₂ waste gas to be reprocessed is generated in a combustion process using fossil combustion fuels and the pyrolysis gases arising on reprocessing are in turn used in the combustion process or the CO₂-containing waste gas is generated in a calcination process (5, 6, 7, 8) in which carbonates are converted into oxides by elimination of CO₂, wherein the pyrolysis gases (20) arising on reprocessing are used in order to provide a proportion of the thermal energy required for the calcination process.

14. A device for carrying out a method according to any one of the preceding claims, consisting of a vertical shaft kiln (10), in which an inlet shaft (32) for the material flow is arranged at the upper end and a drawing-off device (14) for solid residues and ash is arranged at the lower end, wherein the inlet shaft (32) consists of a vertical chute which is filled as a pressure equalisation container with a mixture of ungasifiable bulk material and thermally decomposable organic mass, wherein, in an upper portion (1) of the shaft kiln (10), a suction (20) and separation device (22) for gas and finely divided particles is arranged and, in a middle portion (3), fuel gas feeds (34) for controlling the kiln temperature open into the shaft (10) and wherein, at the lower end (14) of the shaft kiln (10), gas feeds (12, 13) for CO₂ and oxygen-containing gas are provided which are equipped with flow controllers for establishing Boudouard's equilibrium in the shaft kiln (10), wherein a device (16) is furthermore provided which, downstream of the drawing-off device (14), separates the ungasifiable bulk material from the solid residues and returns it to the inlet shaft (32).

## Revendications

1. °) Procédé de retraitement de gaz d'échappement renfermant du CO₂ dans un process de réduction à plusieurs étapes, les gaz d'échappement renfermant du CO₂ étant transférés à contre-courant et transformés en gaz de pyrolyse, par rapport à un flux massique de matières solides constitué par des matières en vrac non gazéifiables et une masse organique décomposable thermiquement ne renfermant pas uniquement du carbone au travers de plusieurs zones (4, 3, 2, 1) jusqu'à une zone d'équilibrage de pression,
selon lequel
dans la direction d'écoulement du flux massique de matières solides,
a. dans une étape de production de gaz de combustion (1), et à une température de 250-700°C, on décompose thermiquement la masse organique dans des conditions réductrices, en des hydrocarbures à chaîne courte, de l'hydrogène et du monoxyde de carbone, en produisant du coke et un résidu,
b. dans une étape intermédiaire (2), et à température croissante, on effectue une oxydation du coke, le monoxyde de carbone produit étant aspiré, en sens inverse du flux massique de matières solides, vers l'étape de production de gaz de combustion (1),
c. dans une étape de production de monoxyde de carbone (3), et à une température de 800-1600°C, on transforme totalement le résidu de coke restant en monoxyde de carbone avec du dioxyde de carbone, en réglant la pression et la température selon l'équilibre de Boudouard,
d. dans une étape de refroidissement (4), on refroidit le résidu solide et ces matières en vrac non gazéifiables en gros morceaux dans un contre-courant de CO₂ et à une température inférieure à 100°C, et on les évacue,
e. au moins les matières en vrac non gazéifiables évacuées sont ramenées dans le circuit après soutirage.

2. °) Procédé conforme à la revendication 1,
**caractérisé en ce que**
dans l'étape intermédiaire (2), on règle la température à une valeur de 600-1000°C et on réduit la pression de sorte que se produisent simultanément dans cette étape, une pyrolyse de la masse organique et la réaction d'équilibre de Boudouard à pression et température peu élevées.

3. °) Procédé conforme à la revendication 2,
**caractérisé en ce que**
on soutire les gaz de pyrolyse au moyen d'un dispositif d'aspiration (20) qui produit la dépression dans l'étape intermédiaire.

4. °) Procédé conforme à l'une des revendications précédentes,
**caractérisé en ce que**
dans une zone d'équilibrage de la pression (32) située au-dessus de la zone de production de gaz de combustion (1), on introduit un mélange de matières en vrac grossières et fines en tant qu'accumulateur de pression.

5. °) Procédé conforme à l'une des revendications précédentes,
**caractérisé en ce qu'**
on commande la température et la pression à partir de la composition de la masse de matières solides et/ou de son débit.

6. °) Procédé conforme à l'une des revendications précédentes,
**caractérisé en ce qu'**
on commande la température et la pression à partir du rapport entre la masse organique décomposable thermiquement fournie et le CO₂, et le cas échéant le gaz renfermant de l'oxygène ajouté.

7. °) Procédé conforme à l'une des revendications précédentes,
**caractérisé en ce qu'**
on mélange en outre au flux massique de matières solides, un porteur de carbone.

8. °) Procédé conforme à l'une des revendications précédentes,
**caractérisé en ce qu'**
on introduit par dosage de l'eau et/ou de la vapeur d'eau dans l'étape de refroidissement (4), dans l'étape intermédiaire (2) ou dans l'étape de monoxyde de carbone (3).

9. °) Procédé conforme à l'une des revendications précédentes,
**caractérisé en ce que**
l'on met en oeuvre le process de réduction en plusieurs étapes dans un four de calcination à cuve verticale (10), les matières en vrac étant transférées dans la cuve de ce four du haut vers le bas, de sorte que les composés renfermant du carbone soient dissociés thermiquement essentiellement en l'absence d'oxygène en produisant du coke de pyrolyse et des gaz de pyrolyse renfermant des molécules à chaîne courte ayant une longueur de chaîne < C₄, et les gaz de pyrolyse formés étant extraits du four de calcination par aspiration, et en tant que matières en vrac des produits de calcination basiques, des précurseurs de ces produits ou des matières en vrac inertes étant de préférence utilisés, de préférence sous la forme de chaux vive (CaO).

10. °) Procédé conforme à l'une des revendications précédentes,
**caractérisé en ce que**
pour le recyclage dans le circuit, on met en oeuvre des matières en vrac ayant une granulométrie dans la plage de 0,5-15 cm après les avoir soutirées de l'étape de refroidissement.

11. °) Procédé conforme à la revendication 10,
**caractérisé en ce qu'**
on purifie les gaz de pyrolyse par filtration (22) pour les débarrasser de poussières fines renfermant des résidus de la pyrolyse liés aux matières en vrac fines pouvant avoir été entraînées avec ces gaz.

12. °) Procédé conforme à l'une des revendications précédentes,
**caractérisé en ce qu'**
- on utilise les gaz de pyrolyse en tant que gaz de synthèse (26) pour des process chimiques et/ou pour leur valorisation thermique,
- on sépare les gaz de pyrolyse par liquéfaction partielle et/ou adsorption par échange de pression en leurs composants gazeux monoxyde de carbone, dioxyde de carbone, hydrogène et hydrocarbures, le monoxyde de carbone étant utilisé en tant que gaz de synthèse (26) pour sa valorisation dans des process chimiques, l'hydrogène séparé étant utilisé pour sa valorisation thermique et/ou en tant que tel, et/ou les hydrocarbures (28) étant utilisés pour leur valorisation thermique et/ou en tant que tels et/ou en tant que carburants, ou
- on transforme les gaz de pyrolyse, par réaction de déplacement eau-gaz (30) par réaction catalytique à une température inférieure à 500°C avec de la vapeur d'eau, essentiellement en hydrogène et en dioxyde de carbone qui sont séparés par un procédé de séparation physique, l'hydrogène étant utilisé pour sa valorisation thermique et/ ou en tant que tel et le CO₂ fermé étant partiellement recyclé pour former le contre-courant.

13. °) Procédé conforme à l'une des revendications précédentes,
**caractérisé en ce que**
les gaz d'échappement renfermant du CO₂ devant être retraités sont produits dans un process de combustion en utilisant des combustibles fossiles et les gaz de pyrolyse produits lors du retraitement sont à nouveau utilisés dans le process de combustion, ou les gaz renfermant du CO₂ sont produits dans un process de calcination (5, 6, 7, 8) dans lequel des carbonates sont transformés en oxydes par dissociation par CO₂, les gaz de pyrolyse (20) formés lors du retraitement étant utilisés pour apporter une partie de l'énergie calorifique nécessaire au process de calcination.

14. °) Dispositif permettant la mise en oeuvre d'un procédé conforme aux revendications précédentes, constitué d'un four à cuve verticale (10), équipé, à son extrémité supérieure, d'une cuve d'entrée (32) du flux massique de matières, et à son extrémité inférieure, d'un dispositif de soutirage (14) des résidus solides et des cendres,
dans lequel
la cuve d'entrée (32) est constituée par une trémie verticale faisant office de réservoir d'égalisation de pression qui est remplie d'un mélange de matières en vrac non gazéifiables et d'une masse organique décomposable thermiquement, en ce qu'une zone supérieure (1) du four à cuve verticale (10) est équipée d'un dispositif d'aspiration (20) et d'un dispositif de séparation (22) des gaz et des particules fines, tandis que dans une zone médiane (3) de ce four débouchent des conduites d'alimentation (34) de gaz de combustion pour commander la température dans la cuve (10), et en ce que l'extrémité inférieure (4) du four à cuve verticale (10), est équipée de conduites d'alimentation de gaz (12, 13) pour le CO₂ et un gaz renfermant de l'oxygène, qui sont elles-mêmes équipées de régulateurs de débit pour le réglage de la réaction d'équilibre de Boudouard dans le four à cuve verticale (10), un dispositif (16) étant en outre prévu pour séparer, en aval du dispositif de soutirage (14), les matières en vrac non gazéifiables du résidu solide, et les renvoyer vers la cuve d'entrée (32).
